(19) Europäisches Patentamt
European Patent Office
Office européen des brevets

(11) **EP 3 258 720 A1**

(12) **EUROPEAN PATENT APPLICATION**
published in accordance with Art. 153(4) EPC

(43) Date of publication:
**20.12.2017 Bulletin 2017/51**

(21) Application number: **16771167.0**

(22) Date of filing: **29.01.2016**

(51) Int Cl.:
**H04W 16/02** (2009.01)     **H04W 8/08** (2009.01)
**H04W 72/00** (2009.01)

(86) International application number:
**PCT/CN2016/072833**

(87) International publication number:
**WO 2016/155412 (06.10.2016 Gazette 2016/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.03.2015 CN 201510142520**

(71) Applicant: **Huawei Technologies Co., Ltd.
Longgang District
Shenzhen, Guangdong 518129 (CN)**

(72) Inventors:
• **DAI, Gang
Shenzhen
Guangdong 518129 (CN)**
• **LI, Zhouqi
Shenzhen
Guangdong 518129 (CN)**
• **HUAN, Haibin
Shenzhen
Guangdong 518129 (CN)**

(74) Representative: **Pfenning, Meinig & Partner mbB
Patent- und Rechtsanwälte
Joachimsthaler Straße 10-12
10719 Berlin (DE)**

(54) **METHOD AND DEVICE FOR REDUCING INTERFERENCE**

(57) The present invention provides a method and device for reducing interference. By using correlation of a modulation signal, interference between intra-frequency cells can be reduced, and downlink receiving performance can be improved, thereby improving performance of a communications system.

FIG. 2

## Description

This application claims priority to Chinese Patent Application No. 201510142520.0, filed with the Chinese Patent Office on March 27, 2015 and entitled "METHOD AND DEVICE FOR REDUCING INTERFERENCE", which is incorporated herein by reference in its entirety.

## TECHNICAL FIELD

Embodiments of the present invention relate to the communications field, and in particular, to a method and device for reducing interference between intra-frequency cells in a communications system to improve downlink performance.

## BACKGROUND

With development of modern communications, a 3rd Generation (3rd generation, 3G) network and a 4th Generation (4th generation, 4G) network are constructed in a large scale worldwide, and a quantity of users of an original Global System for Mobile Communications (global system for mobile communications, GSM) system is decreasing continuously. Due to limited spectrum resources, it is a general trend of a global network development to allocate, by means of refarming, spectrum resources occupied by the GSM to a Universal Mobile Telecommunications System (universal mobile telecommunications system, UMTS) or to a Long Term Evolution (long term evolution, LTE) system. However, due to costs and network coverage advantages of a GSM device, it is estimated that the GSM network will still exist for a long period of time. In a future machine-to-machine (machine-to-machine, M2M) era, GSM modules of low costs may be widely used for a large amount of low-speed small packet sensor data. Therefore, although the quantity of GSM users is decreasing continuously, an operator still expects the GSM to exist for a long time as an infrastructure network.

It is found through statistics that bandwidth of more than half of GSM networks around the globe is less than 7.4 M, and if some of bandwidth resources are allocated from the GSM networks to 3G/4G networks by means of refarming, there will be fewer GSM spectrum resources. How to use remaining bandwidth spectra to perform GSM networking is a problem that many operators need to address. One manner is to use a more compact multiplexing manner for networking, for example using 3*3, or even 2*3, or 1*3. However, using the more compact multiplexing manner for networking may cause a sharp decrease in a downlink carrier-to-interference ratio, consequently causing receiving performance of a terminal to deteriorate.

## SUMMARY

The present invention provides a method and device for reducing interference. By means of sending a modulation signal in a specific timeslot, impact caused by interference can be reduced when a compact multiplexing manner is used for networking, and downlink receiving performance is improved.

According to a first aspect, a device for sending a modulation signal on a BCCH carrier to reduce interference is provided, and the device includes:

a determining unit, configured to determine a timeslot for sending a modulation signal; and
a sending unit, configured to send the modulation signal in the determined timeslot, where
an autocorrelation metric value of the modulation signal is greater than a first threshold.

With reference to the first aspect, in a first possible implementation manner of the first aspect, average energy of the modulation signal is equal to average energy of a GMSK modulation signal.

With reference to the first aspect or the first possible implementation manner of the first aspect, in a second possible implementation manner of the first aspect, the device further includes a spectrum processing unit, where

the spectrum processing unit is configured to shift a spectrum of the modulation signal, so that the modulation signal is away from a center frequency of a channel.

With reference to the first aspect, in a third possible implementation manner of the first aspect, the determining unit is further configured to: before the timeslot for sending the modulation signal is determined, determine, according to content to be sent, whether to send the modulation signal.

According to a second aspect, a method for sending an optimized modulation signal in a Dummy timeslot on a BCCH carrier to reduce interference is provided, where the method is used in a scenario in which a primary BCCH is multiplexed, and the method includes:

determining a timeslot for sending a modulation signal; and
sending the modulation signal in the determined timeslot, where
an autocorrelation metric value of the modulation signal is greater than a first threshold.

With reference to the second aspect, in a first possible implementation manner of the second aspect, average energy of the modulation signal is equal to average energy of a GMSK modulation signal.

With reference to the second aspect, or the first possible implementation manner of the second aspect, in a second possible implementation manner of the second aspect, a spectrum of the modulation signal is shifted, so that the modulation signal is away from a center frequency of a channel.

With reference to the second aspect, in a third possible implementation manner of the second aspect, before the determining a timeslot for sending a modulation signal, the method further includes:

determining, according to content to be sent, whether to send the modulation signal.

According to a third aspect, a base station is provided, including the first aspect or any one of the first to the third possible implementation manners of the first aspect.

Based on the foregoing technical solutions, in a method and a network side device for transmitting a modulation signal on a BCCH provided in the embodiments of the present invention, by using correlation of the modulation signal, interference between intra-frequency cells can be reduced, and downlink receiving performance can be improved, thereby improving performance of a communications system.

## BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1(a) and FIG. 1(b) are schematic diagrams of an application scenario according to an embodiment of the present invention;
FIG. 2 is a schematic flowchart of a method for sending a modulation signal according to an embodiment of the present invention;
FIG. 3 is another schematic diagram of a method for sending a modulation signal according to an embodiment of the present invention;
FIG. 4 is another schematic diagram of a method for sending a modulation signal according to an embodiment of the present invention;
FIG. 5 is a schematic diagram of sending a modulation signal in a staggered timeslot according to an embodiment of the present invention;
FIG. 6 is a schematic structural diagram of sending a modulation signal according to an embodiment of the present invention; and
FIG. 7 is a schematic structural diagram of sending a modulation signal according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System of Mobile Communications (Global System of Mobile Communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), a Worldwide Interoperability for Microwave Access (Worldwide Interoperability for Microwave Access, "WiMAX" for short) communications system or the like.

It should be understood that in the embodiments of the present invention, a network side device may be a base station, or may be another device having a function of a base station. The base station may be a base transceiver station (Base Transceiver Station, "BTS" for short) in the GSM or CDMA, or may be a NodeB (NodeB, "NB" for short) in the WCDMA, or may be an evolved NodeB (Evolutional Node B, "ENB" or "e-NodeB" for short) in the LTE, which is not limited in the present invention.

It should also be understood that in the embodiments of the present invention, user equipment may be referred to as terminal equipment (Terminal Equipment), a mobile station (Mobile Station, MS for short), a mobile terminal (Mobile Terminal), and the like. The user equipment may communicate with one or more core networks through a radio access network (Radio Access Network, RAN for short). For example, the user equipment may be a mobile phone (also referred to as a "cellular" phone) or a computer with a mobile terminal. For example, the user equipment may be a portable, pocket-sized, handheld, computer built-in, or in-vehicle mobile apparatus, which exchanges voice and/or data with the radio access network.

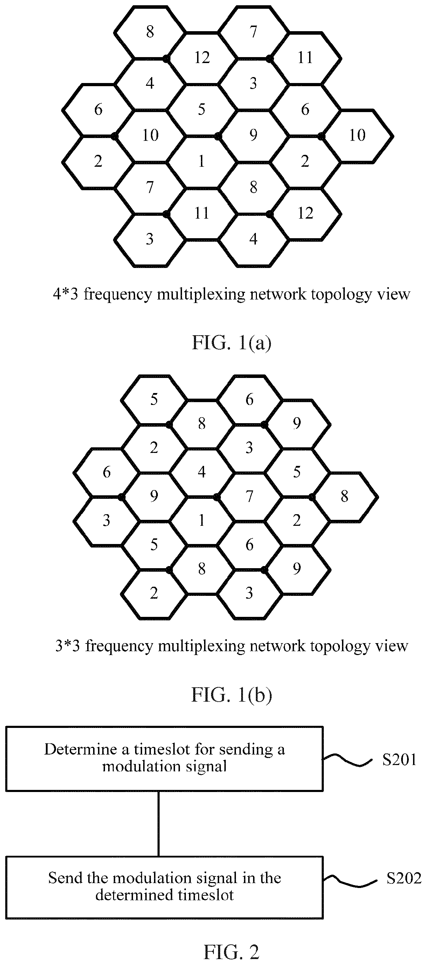

FIG. 1(a) and FIG. 1(b) show schematic diagrams of examples of a scenario according to an embodiment of the present invention. It should be noted that the examples in FIG. 1(a) and FIG. 1(b) are merely intended to help a person skilled in the art to better understand the embodiments of the present invention, rather than limiting the scope of the embodiments of the present invention.

As shown in FIG. 1(a), a base station includes multiple sectors (where three sectors are shown in the figure), and a 4*3 frequency multiplexing mode is used by the multiple sectors. A basic carrier frequency of the GSM is a primary broadcast control channel (broadcast control channel, BCCH for short) carrier frequency. BCCH frequency coverage and signal quality determine a network service range and network service performance. Generally, a C/I of a primary BCCH is required to be 12 dB or higher, and frequencies of neighboring sectors are not adjacent to each other. Each carrier frequency of the GSM occupies a bandwidth of 200 kHz, and therefore, a bandwidth of 3*4*0.2 = 2.4 (MHz) is needed.

Because bandwidth of more than half of GMS networks around the globe is less than 7.4 M, based on this, if bandwidth of 5 M of GSM spectrum resources is allocated to 3G/4G networks by means of refarming, a remaining spectrum of the GSM is less than 2.4 M. If the remaining spectrum resources of the GSM are multiplexed for networking, a compact multiplexing manner has to be used. For example, a 3*3 multiplexing manner is used, as shown in FIG. 1(b), or even a more compact multiplexing manner such as 2*3 or 1*3 is used for networking.

Because a more compact multiplexing manner is used for networking, a downlink carrier-to-interference ratio decreases dramatically. According to a statistical analysis, when the 3*3 multiplexing manner is used for networking, the downlink carrier-to-interference ratio deteriorates by 4.5 dB compared with that of the 4*3 multiplexing manner; and when 2*3 multiplexing is used, the downlink carrier-to-interference ratio deteriorates by 7 dB compared with that of the 3*3 multiplexing.

A decrease in the downlink carrier-to-interference ratio and an increase in interference between intra-frequency cells cause receiving performance of a terminal to deteriorate.

**Embodiment 1**

An embodiment of the present invention provides a method for sending an optimized modulation signal to reduce interference when a compact frequency multiplexing manner is used, and a schematic diagram of the method is shown in FIG. 2.

S201: Determine a timeslot for sending a modulation signal.

In this embodiment, 3*3 multiplexing networking shown in FIG. 1(b) is used as an example for description. A BCCH carrier frequency needs to be used for downlink measurement. However, service allocation is not performed on the carrier all the time, that is, sometimes it is unnecessary to transmit a service signal on the BCCH. However, because a terminal needs to measure a neighboring cell, transmit power always needs to be maintained on a primary BCCH. Therefore, when there is no service signal, a modulation signal needs to be sent, where the modulation signal may include no specific information but is only used for neighboring cell measurement at a terminal side.

Therefore, whether the modulation signal needs to be sent is determined first. Specifically, whether the modulation signal needs to be sent may be determined according to content that is sent currently. When no service signal needs to be sent currently, the modulation signal is determined to be sent.

S202: Send the modulation signal in the determined timeslot.

When it is determined that no service signal needs to be sent, the modulation signal is sent in the determined timeslot.

An autocorrelation metric value of the modulation signal is greater than a first threshold.

Specifically, this embodiment is described by using the following modulation signal as an example:

$$x(n) = \sum_{i=0}^{K-1} (1/sqrt(K)) * \exp(j * 2 * pi * f_i * nT_s), K \geq 1$$

The modulation signal satisfies the following condition:

an autocorrelation metric value of the modulation signal is greater than a threshold.

An autocorrelation metric value $Corr_{min}$ of the modulation signal shown may be calculated according to the following functions:

$$Corr_{min} = \arg\min_k (Corr(n))$$

$$Corr(n) = \sum_i x(n+i)x^*(n+i-D), n = 1,..., nBurstLen - D$$

Therefore, to ensure a given performance effect, the autocorrelation metric value $Corr_{min}$ of the modulation signal should be greater than a given threshold, and the threshold may be set according to an application demand. For example, 45 may be set as the threshold.

It should be understood that a greater autocorrelation metric value $Corr_{min}$ of the modulation signal indicates stronger time-domain correlation of the signal. The modulation signal is only an example. Any signal that satisfies strong time-domain correlation, for example, a narrowband signal such as a narrowband periodic signal or even a monophonic signal, may be used as the modulation signal.

Preferably, average energy of the modulation signal is equal to average energy of a GMSK modulation signal. It is assumed that an existing modulation signal is a GMSK modulation signal, which is represented by

$$r(n), n = 1,2,3...,nBurstLen ,$$

and
the modulation signal used in this embodiment is

$$x(n), n = 1,2,3...,nBurstLen .$$

In this case, to avoid affecting the neighboring cell measurement at the terminal side, the average energy of the modulation signal may be equal to the average energy of the existing GMSK modulation signal, that is, the average energy satisfies:

$$\sum_{k=1}^{nBurstLen} x(n)x^*(n) \approx \sum_{k=1}^{nBurstLen} r(n)r^*(n)$$

It should be understood that the average energy of the modulation signal shown in this embodiment of the present invention only needs to be roughly equal to the average energy of the existing GMSK modulation signal, and the average energy of the modulation signal and the average energy of the existing GMSK modulation signal may be considered to be equal when their difference is within a given range.

Preferably, a spectrum of the modulation signal may further be shifted. This embodiment provides an example of a shift formula for shifting the spectrum:

$$y(n) = x(n) * \exp\left(j * 2 * pi * \Delta f / FST / F_s\right)$$

Because the signal after the change has a relatively narrow spectrum, to maximize a gain of downlink demodulation performance, a particular spectrum shift may be performed on the signal $x(n)$ within a bandwidth of 200 K of a GMSK channel. A greater distance from a centre frequency of the channel indicates less interference to an intra-frequency carrier, and a greater performance gain at a downlink terminal side. It should be understood that if the spectrum is shifted by an excessive amount, accuracy of level measurement at the downlink terminal side is affected. Therefore, a spectrum shift amount $\Delta f$ generally needs to be controlled within an appropriate range. In this embodiment, an example of a range is provided: -60$KHz \leq \Delta f \leq$ 60$KHz$, but the range is not limited thereto.

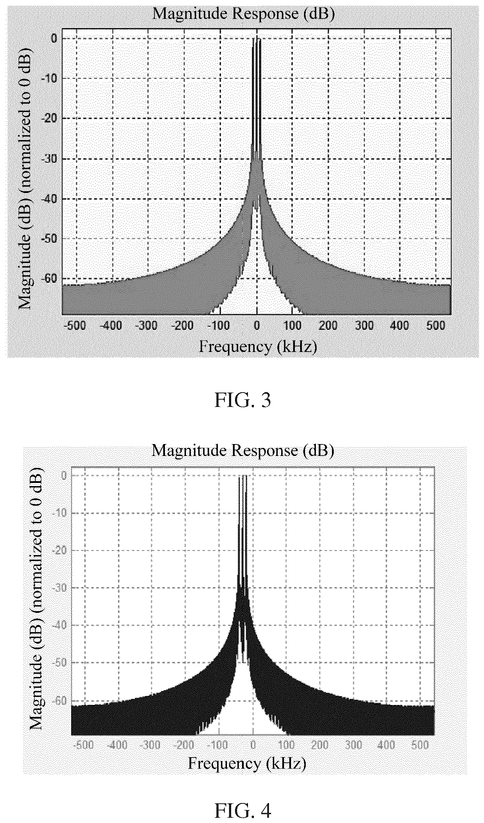

FIG. 3 shows a simulation spectrum graph of the modulation signal according to this embodiment. By means of the spectrum shift shown above, where $\Delta f$ = -30$KHz$ is used as an example in this embodiment, a spectrum graph of the spectrum-shifted modulation signal shown in FIG. 4 is obtained after simulation. It can be seen in the figure that the modulation signal after the spectrum shift has a narrower frequency band and smaller intra-frequency interference.

**Embodiment 2**

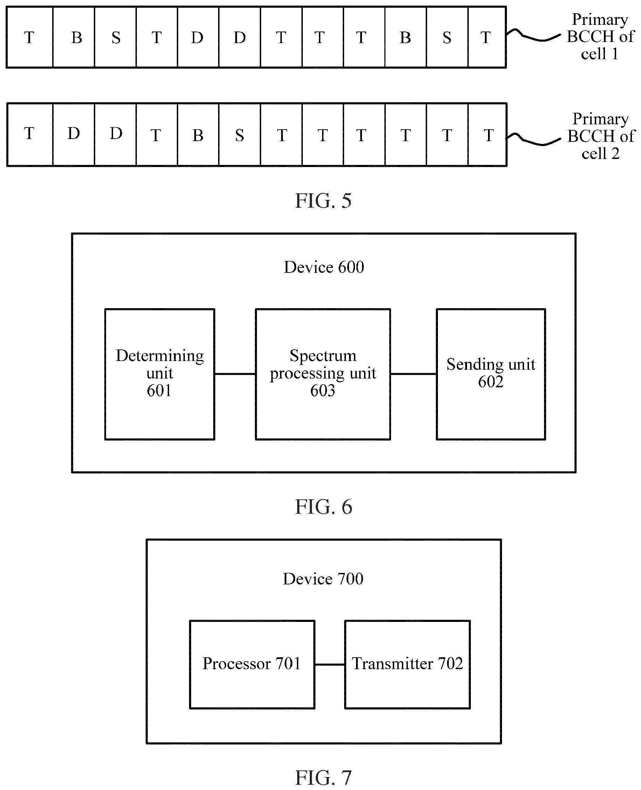

Intra-frequency interference may occur between two intra-frequency cells with a primary BCCH. Based on a synchronous network, if the two cells are directly used, timeslots of the primary BCCH collide with each other, causing relatively strong intra-frequency interference, which affects network access, network coverage, and the like. Timeslots may be staggered, as shown in FIG. 5, where a timeslot 0 of a primary BCCH of a cell 2 corresponds to a timeslot, which is not a timeslot 0, of cell 1. By using the modulation signal in Embodiment 1, demodulation performance of a timeslot 0 of a downlink primary BCCH can be improved, and impact of an intra-frequency collision can be reduced. Fixed configuration of idle timeslots can improve performance of a downlink terminal side by a maximum degree.

For the synchronous network, after the timeslots are staggered in the foregoing manner, for example, the timeslot 0 of the primary BCCH of the cell 2 corresponds to a timeslot of cell 1, and the timeslot corresponding to the timeslot 0 may also be fixedly configured as a TCH timeslot, when no useful information is to be sent (in a DTX segment or when the channel is not occupied), to send the modulation signal used in Embodiment 1 can improve demodulation performance of the downlink primary BCCH, and alleviate impact of an intra-frequency collision. Through this application manner in which timeslots are staggered, downlink demodulation performance can be improved without any system capacity loss.

For an asynchronous network, chances are slim that a perfect collision occurs between primary BCCH timeslots of two intra-frequency cells. When a collision with a TCH timeslot occurs, if no useful information is to be sent (in a DTX segment or when a channel is not occupied), the modulation signal mentioned above may also be sent, which can also improve downlink demodulation performance and reduce impact of an intra-frequency collision in an asynchronous network scenario.

**Embodiment 3**

Embodiment 3 provides a device 600 for transmitting a modulation signal on a BCCH to reduce interference. The device 600 may be a base station or another functional entity. The device includes a determining unit 601, and a sending unit 602.

The determining unit 601 is configured to determine a timeslot for sending a modulation signal.

In this embodiment, 3*3 multiplexing networking shown in FIG. 1(b) is used as an example for description. A BCCH carrier frequency needs to be used for downlink measurement. However, service allocation is not performed on the carrier all the time, that is, sometimes it is unnecessary to transmit a service signal on the BCCH. However, because a terminal needs to measure a neighboring cell, transmit power always needs to be maintained on a primary BCCH. Therefore, when there is no service signal, the modulation signal needs to be sent, where the modulation signal may include no specific information.

Therefore, whether the modulation signal needs to be sent is determined first. Specifically, whether the modulation signal needs to be sent may be determined according to content that is sent currently. When no service signal needs to be sent currently, the modulation signal is determined to be sent.

The sending unit 602 is configured to send the modulation signal in the determined timeslot.

When it is determined that no service signal needs to be sent, the modulation signal is sent in the determined timeslot.

An autocorrelation metric value of the modulation signal is greater than a first threshold.

Specifically, this embodiment is described by using the following modulation signal as an example:

$$x(n) = \sum_{i=0}^{K-1} (1/sqrt(K)) * \exp(j*2*pi*f_i*nT_s), K \geq 1$$

The modulation signal satisfies the following condition:

an autocorrelation metric value of the modulation signal is greater than a threshold.

An autocorrelation metric value $Corr_{min}$ of the modulation signal shown may be calculated according to the following functions:

$$Corr_{min} = \arg \min_{k}(Corr(n))$$

$$Corr(n) = \sum_{i} x(n+i)x^*(n+i-D), n = 1,...,nBurstLen - D$$

Therefore, to ensure a given performance effect, the autocorrelation metric value $Corr_{min}$ of the modulation signal should be greater than a given threshold, and the threshold may be set according to an application demand. For example, 45 may be set as the threshold.

It should be understood that a greater autocorrelation metric value $Corr_{min}$ of the modulation signal indicates stronger time-domain correlation of the signal. The modulation signal is only an example. Any signal that satisfies strong time-domain correlation, for example, a narrowband signal such as a narrowband periodic signal or even a monophonic signal, may be used as the modulation signal.

Preferably, average energy of the modulation signal is equal to average energy of a GMSK modulation signal. It is assumed that an existing modulation signal is a GMSK modulation signal, which is represented by

$$r(n), n = 1,2,3...,nBurstLen_,$$

and
the modulation signal used in this embodiment is

$$x(n), n = 1,2,3...,nBurstLen_.$$

In this case, to avoid affecting the neighboring cell measurement at the terminal side, the average energy of the modulation signal may be equal to the average energy of the existing GMSK modulation signal, that is, the average energy satisfies:

$$\sum_{k=1}^{nBurstLen} x(n)x^*(n) \approx \sum_{k=1}^{nBurstLen} r(n)r^*(n)$$

It should be understood that the average energy of the modulation signal shown in this embodiment of the present invention only needs to be roughly equal to the average energy of the existing GMSK modulation signal, and the average energy of the modulation signal and the average energy of the existing GMSK modulation signal may be considered to be equal when their difference is within a given range.

Optionally, this embodiment further includes a spectrum processing unit 603, which can shift a spectrum of the modulation signal. In this embodiment, an example of a shift formula for shifting the spectrum is provided:

$$y(n) = x(n) * \exp(j*2*pi*\Delta f / FST / F_s)$$

Because the signal after the change has a relatively narrow spectrum, to maximize a gain of downlink demodulation performance, a particular spectrum shift may be performed on the signal $x(n)$ within a bandwidth of 200 K of a GMSK channel. A greater distance from a centre frequency of the channel indicates less interference to an intra-frequency carrier, and a greater performance gain at a downlink terminal side. It should be understood that if the spectrum is shifted by an excessive amount, accuracy of level measurement at the downlink terminal side is affected. Therefore, a spectrum shift amount $\Delta f$ generally needs to be controlled within an appropriate range. In this embodiment, an example of a range is provided: $-60KHz \leq \Delta f \leq 60KHz$, but the range is not limited thereto.

**Embodiment 4**

Embodiment 4 provides a device 700 for transmitting a modulation signal on a BCCH to reduce interference. The device 700 may be a base station or another functional entity. The device includes a processor 701 and a transmitter 702.

The processor 701 is configured to determine a timeslot for sending a modulation signal.

The processor 701 determines first whether the modulation signal needs to be sent. Specifically, whether the modulation signal needs to be sent may be determined according to content that is sent currently. When no service signal needs to be sent currently, the modulation signal is determined to be sent.

The transmitter 702 is configured to send the modulation signal in the determined timeslot.

When it is determined that no service signal needs to be sent, the modulation signal is sent in the determined timeslot.

An autocorrelation metric value of the modulation signal is greater than a first threshold.

Specifically, this embodiment is described by using the following modulation signal as an example:

$$x(n) = \sum_{i=0}^{K-1} (1/sqrt(K)) * \exp(j * 2 * pi * f_i * nT_s), K \geq 1$$

The modulation signal satisfies the following condition:

an autocorrelation metric value of the modulation signal is greater than a threshold.

A specific determining manner is described in detail in the foregoing embodiments, and details are not described herein again.

Preferably, average energy of the modulation signal is equal to average energy of a GMSK modulation signal.

Optionally, the processor 701 can further shift a spectrum of the modulation signal. In this embodiment, an example of a shift formula for shifting the spectrum is provided:

$$y(n) = x(n) * \exp(j * 2 * pi * \Delta f / FST / F_s)$$

Because the signal after the change has a relatively narrow spectrum, to maximize a gain of downlink demodulation performance, a particular spectrum shift may be performed on the signal $x(n)$ within a bandwidth of 200 K of a GMSK channel. A greater distance from a centre frequency of the channel indicates less interference to an intra-frequency carrier, and a greater performance gain at a downlink terminal side. It should be understood that if the spectrum is shifted by an excessive amount, accuracy of level measurement at the downlink terminal side is affected. Therefore, a spectrum shift amount $\Delta f$ generally needs to be controlled within an appropriate range. In this embodiment, an example of a range is provided: $-60KHz \leq \Delta f \leq 60KHz$, but the range is not limited thereto.

It should be understood that the devices 600 and 700 according to the embodiments of the present invention can accordingly execute the methods in the embodiments of the present invention.

It should be understood that "an embodiment" or "one embodiment" mentioned throughout the specification means that specific characteristics, structures or properties relevant to the embodiments are included in at least one embodiment of the present invention. Therefore, "in an embodiment" or "in one embodiment" that occurs throughout the specification may not necessarily refer to a same embodiment. In addition, these specific features, structures, or properties may be combined in one or more embodiments in any proper manner.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of this application, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A device for sending a modulation signal on a BCCH carrier to reduce interference, wherein the device comprises:

   a determining unit, configured to determine a timeslot for sending a modulation signal; and
   a sending unit, configured to send the modulation signal in the determined timeslot, wherein
   an autocorrelation metric value of the modulation signal is greater than a first threshold.

2. The device according to claim 1, wherein average energy of the modulation signal is equal to average energy of the GMSK modulation signal.

3. The device according to claim 1 or 2, further comprising a spectrum processing unit, wherein
   the spectrum processing unit is configured to shift a spectrum of the modulation signal, so that the modulation signal is away from a center frequency of a channel.

4. The device according to claim 1, wherein the determining unit is further configured to: before the timeslot for sending the modulation signal is determined, determine, according to content to be sent, whether to send the modulation signal.

5. A method for sending a modulation signal on a BCCH carrier to reduce interference, wherein the method is used in a scenario in which a primary BCCH is multiplexed, and the method comprises:

   determining a timeslot for sending a modulation signal; and
   sending the modulation signal in the determined timeslot, wherein
   an autocorrelation metric value of the modulation signal is greater than a first threshold.

6. The method according to claim 5, wherein average energy of the modulation signal is equal to average energy of the GMSK modulation signal.

7. The method according to claim 5 or 6, wherein a spectrum of the modulation signal is shifted, so that the modulation signal is away from a center frequency of a channel.

8. The method according to claim 5, wherein before the determining a timeslot for sending a modulation signal, the method further comprises:

   determining, according to content to be sent, whether to send the modulation signal.

9. Abase station, comprising the device according to any one of claims 1 to 4.

4*3 frequency multiplexing network topology view

FIG. 1(a)

3*3 frequency multiplexing network topology view

FIG. 1(b)

FIG. 2

FIG. 3

FIG. 4

| T | B | S | T | D | D | T | T | T | B | S | T | Primary BCCH of cell 1 |

| T | D | D | T | B | S | T | T | T | T | T | T | Primary BCCH of cell 2 |

FIG. 5

Device 600

| Determining unit 601 | Spectrum processing unit 603 | Sending unit 602 |

FIG. 6

Device 700

| Processor 701 | Transmitter 702 |

FIG. 7

## INTERNATIONAL SEARCH REPORT

| International application No. |
| --- |
| **PCT/CN2016/072833** |

**A. CLASSIFICATION OF SUBJECT MATTER**

H04W 16/02 (2009.01) i; H04W 8/08 (2009.01) i

According to International Patent Classification (IPC) or to both national classification and IPC

**B. FIELDS SEARCHED**

Minimum documentation searched (classification system followed by classification symbols)

H04W H04B H04L

Documentation searched other than minimum documentation to the extent that such documents are included in the fields searched

Electronic data base consulted during the international search (name of data base and, where practicable, search terms used)

WPI; EPODOC; CNPAT; CNKI: BCCH BROADCST CONTROL CHANNEL MODULATE SIGNAL SLOT INTERFERENCE REDUCE SUPPRESS LOWER DECREASE SELF CORRELATION NEIGHBOR CELL DETECT slot time eliminate self correlation degree

**C. DOCUMENTS CONSIDERED TO BE RELEVANT**

| Category* | Citation of document, with indication, where appropriate, of the relevant passages | Relevant to claim No. |
| --- | --- | --- |
| A | Ericsson. "Compressed QAM modulation", 3GPP TSG GERAN #31 Tdoc GP-061690, 08 September 2006 (08.09.2006), sections 1 and 4 | 1-9 |
| A | CN 1127575 A (NOKIA TELECOMMUNICATIONS OY), 24 July 1996 (24.07.1996), the whole document | 1-9 |
| A | US 2008165675 A1 (YANG, Yunsong et al.), 10 July 2008 (10.07.2008), the whole document | 1-9 |
| A | WO 2012058648 A2 (NEOCIFIC INC.), 03 May 2012 (03.05.2012), the whole document | 1-9 |

☐ Further documents are listed in the continuation of Box C.      ☒ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 18 April 2016 (18.04.2016) | **28 April 2016 (28.04.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **GAO, Jing** Telephone No.: (86-10) **62413290** |
| --- | --- |

Form PCT/ISA/210 (second sheet) (July 2009)

## INTERNATIONAL SEARCH REPORT
### Information on patent family members

International application No.

**PCT/CN2016/072833**

| Patent Documents referred in the Report | Publication Date | Patent Family | Publication Date |
|---|---|---|---|
| CN 1127575 A | 24 July 1996 | EP 0699342 A1 | 06 March 1996 |
| | | NO 954665 A | 17 January 1996 |
| | | US 5719857 A | 17 February 1998 |
| | | AU 5936198 A | 21 May 1998 |
| | | AT 193627 T | 15 June 2000 |
| | | AU 1952095 A | 09 October 1995 |
| | | DE 69517266 T2 | 19 October 2000 |
| | | JP H08510627 A | 05 November 1996 |
| | | FI 941289 A | 19 September 1995 |
| | | WO 9526040 A2 | 28 September 1995 |
| US 2008165675 A1 | 10 July 2008 | WO 2008083622 A1 | 17 July 2008 |
| | | US 2010157957 A1 | 24 June 2010 |
| | | CN 101548518 A | 30 September 2009 |
| WO 2012058648 A2 | 03 May 2012 | US 2012163223 A1 | 28 June 2012 |
| | | US 2015230261 A1 | 13 August 2015 |
| | | US 2014226597 A1 | 14 August 2014 |

Form PCT/ISA/210 (patent family annex) (July 2009)

## REFERENCES CITED IN THE DESCRIPTION

**Patent documents cited in the description**

- CN 201510142520